(19) Europäisches Patentamt
European Patent Office
Office européen des brevets

(11) **EP 4 484 170 A1**

(12) **EUROPEAN PATENT APPLICATION**

(43) Date of publication:
**01.01.2025 Bulletin 2025/01**

(21) Application number: **24184543.7**

(22) Date of filing: **26.06.2024**

(51) International Patent Classification (IPC):
***B41J 2/21*** *(2006.01)* ***B41J 11/00*** *(2006.01)*

(52) Cooperative Patent Classification (CPC):
**B41J 2/2135; B41J 2/2114; B41J 2/2117;**
**B41J 2/2132; B41J 2/2146**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.06.2023 JP 2023105893**

(71) Applicant: **CANON KABUSHIKI KAISHA**
**Tokyo 146-8501 (JP)**

(72) Inventor: **MASUYAMA, Atsuhiko**
**Tokyo (JP)**

(74) Representative: **WESER & Kollegen**
**Patentanwälte PartmbB**
**Radeckestraße 43**
**81245 München (DE)**

(54) **IMAGE PROCESSING APPARATUS, IMAGE PROCESSING METHOD, PROGRAM, AND STORAGE MEDIUM**

(57) The image processing apparatus (1) obtains a read image obtained by reading a pattern for a colored material and a colorless material formed on a print medium (S) by print heads (22). The image processing apparatus (1) determines an adjustment value for adjusting misalignment between printing positions of the print heads (22) by generating an inverted image being the read image with inverted density based on at least one of a result of a recognition process on the pattern in the read image or print medium information indicating a type of the print medium (S).

FIG.12B

EP 4 484 170 A1

**Description**

BACKGROUND

Field

The present disclosure relates to adjustment of the printing position of a printing material.

Description of the Related Art

Inkjet printing apparatuses have been known which include so-called full-line print heads having a print width equivalent to the width of a print medium. Inkjet printing apparatuses having such print heads are capable of printing an image on substantially the entire surface of a print medium by moving the print heads relative to the print medium once. Printing apparatuses with full-line print heads may have errors in the attachment position of a print head(s) and the attachment positions of multiple print heads relative to each other. These errors may cause a deterioration in printing quality as they cause misalignment of the ink landing positions (attachment positions) on the print medium. In the following, a process of correcting such misalignment of the ink landing positions will be referred to as "printing position adjustment".

As a printing position adjustment method, Japanese Patent Laid-Open No. 2014-091304 discloses a method of performing a printing position adjustment based on an analysis result obtained by analyzing a result of reading a pattern formed on a print medium.

SUMMARY

The present disclosure in its first aspect provides an image processing apparatus as specified in claims 1 to 15. The present disclosure in its second aspect provides an image processing method as specified in claim 16. The present disclosure in its third aspect provides a program as specified in claim 17. The present disclosure in its fourth aspect provides a storage medium as specified in claim 18.

Further features of the present disclosure will become apparent from the following description of exemplary embodiments with reference to the attached drawings.

BRIEF DESCRIPTION OF THE DRAWINGS

Fig. 1 is a schematic cross-sectional view of a printing apparatus;
Fig. 2 is an enlarged perspective view of a printing unit;
Fig. 3 is a view illustrating a print head raising-lowering mechanism;
Fig. 4 is a view illustrating a test pattern for correcting print head misalignment;
Figs. 5A and 5B are diagrams illustrating detailed layouts of pattern matching patterns;
Fig. 6 is an explanatory diagram of the correspondence between a print chip, ejection nozzles, and patterns;
Fig. 7 is an explanatory diagram of a pattern for calculating the amount of misalignment between colors;
Fig. 8 is an explanatory diagram of a method of calculating the amount of misalignment between nozzle arrays;
Fig. 9 is an explanatory diagram of a method of calculating the amount of misalignment between chips and a method of calculating the amount of tilt of a head;
Fig. 10 is an explanatory diagram of a method of calculating the amount of misalignment between print heads;
Fig. 11 is an explanatory diagram of a mark detection process;
Figs. 12A and 12B are flowcharts illustrating a flow of a printing position adjustment process;
Figs. 13A to 13C are diagrams illustrating patterns for calculating the amount of misalignment between a clear ink print head and a color ink print head;
Figs. 14A to 14D are flowcharts illustrating a flow of a printing position adjustment process; and
Fig. 15 is a diagram illustrating patterns for calculating the amount of misalignment between print heads for paper and films.

DESCRIPTION OF THE EMBODIMENTS

Embodiments of the present disclosure will be specifically described below with reference to the drawings. It is to be noted that the components described in the following embodiments are mere examples, and the apparatus configuration and various conditions to which the present disclosure is applied can be modified or changed as appropriate without departing from the gist of the present disclosure, and are not limited to the following embodiments. For example, the dimensions, materials, and shapes of constituent parts described in the following embodiments as well as their relative positions and so on can be changed as appropriate based on the apparatus configuration and various conditions to which the present disclosure is applied, and the present disclosure is not limited to the following embodiments unless otherwise noted.

Depending on the type of print medium, the tone of the background color in a pattern for a colorless material for fixing a colored material sometimes get inversed. As a result, an analysis error may occur with the read pattern. While it has been found that this phenomenon occurs due to the print medium's permeation characteristics with the colorless material with which to print the pattern, it is difficult for the user to identify and set all of these permeation characteristics.

An object of the present disclosure is to provide a technology to accurately adjust misalignment between the printing positions of print heads regardless of the print medium's permeation characteristics with a colorless material for fixing a colored material.

[Embodiment 1]

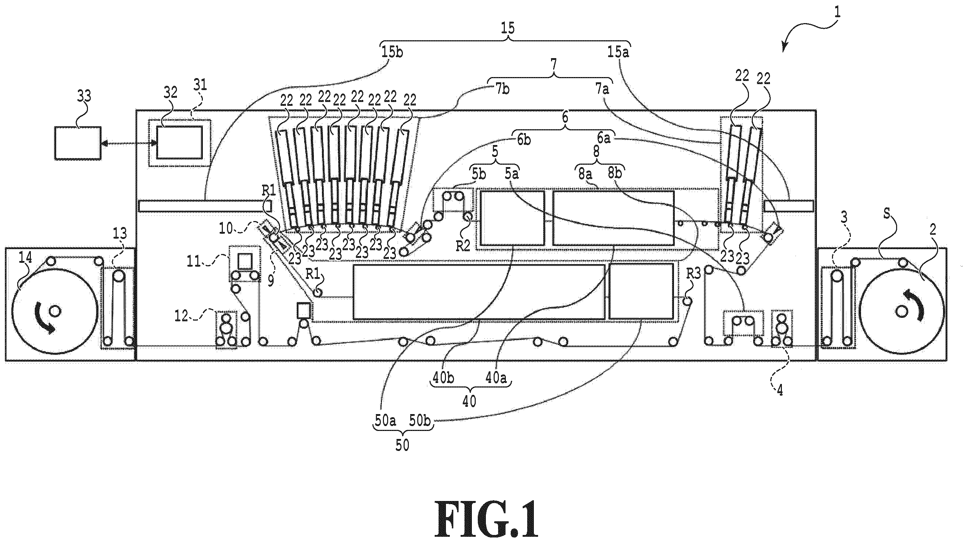

Fig. 1 is a schematic cross-sectional view illustrating an internal configuration of a high-speed line printer as a printing apparatus 1 according to Embodiment 1 which uses a continuous long sheet rolled into a roll as a print medium. In Fig. 1, a direction toward above the printing apparatus 1 is defined as "upward", a direction from the right to the left is defined as "lengthwise direction", and the widthwise direction of the long sheet perpendicular to the sheet conveyance direction (from the near side toward the far side) is defined as "sheet width direction".

The printing apparatus 1 includes a unwinding roller unit 2, a first dancer unit 3, a first main conveyance unit 4, a meandering correction unit 5, a conveyance detection unit 6, a printing unit 7, a fixation unit 8, a conveyance tension detection unit 9, a printed image position detection unit 10, a scanner unit 11, a second main conveyance unit 12, a second dancer unit 13, and a winding roller unit 14. The printing apparatus 1 further includes a maintenance unit 15. The fixation unit 8 includes a drying unit 40 and a cooling unit 50. A sheet S is conveyed along the conveyance path illustrated with a solid line in Fig. 1 and is processed at each unit.

The printing apparatus 1 performs a first printing stage and a second printing stage in this order along the conveyance path for the sheet S from an upstream side in the conveyance direction of the sheet S. At the first printing stage, an image is printed on and fixed to the sheet S by a first printing unit 7a, a first drying unit 40a, and a first cooling unit 50a. At the second printing stage, an image is printed on and fixed to the sheet S subjected to the first printing step by a second printing unit 7b, a second drying unit 40b, and a second cooling unit 50b. Thus, the printing apparatus 1 is capable of successively printing images on the sheet S by passing the sheet S through the first and second printing stages. The printing apparatus 1 is also capable of determining a printing stage to be alternatively selected based on printing conditions. In that case, images are printed on the sheet S only at the selected printing stage.

Incidentally, regarding the conveyance of the sheet S, conveyance of the sheet S in the direction from the unwinding roller unit 2 to the winding roller unit 14 is defined as "forward conveyance", while conveyance of the sheet S in the opposite direction from the winding roller unit 14 to the unwinding roller unit 2 is defined as "backward conveyance".

The unwinding roller unit 2 holds and feeds the sheet. The unwinding roller unit 2 is configured to accommodate an unwinding roller and feed the sheet S by drawing it out. Note that the number of rolls that can be accommodated is not limited to one, and the unwinding roller unit 2 may be configured to accommodate two rolls or three or more rolls and feed a sheet S by drawing it out from one of the rolls. Also, the rotation of the unwinding roller unit 2 is controlled by a driving motor (not illustrated) alone such that the unwinding roller unit 2 can be rotated forward and backward.

The first dancer unit 3 is a unit for applying a constant sheet tension between the unwinding roller unit 2 and the first main conveyance unit 4. The first dancer unit 3 applies the sheet tension with a tension application unit not illustrated.

The first main conveyance unit 4 feeds the sheet S to units disposed in the following order along the conveyance path. Specifically, the first main conveyance unit 4 feeds the sheet S to a first meandering correction unit 5a, a first conveyance detection unit 6a, the first printing unit 7a, a first fixation unit 8a, the conveyance tension detection unit 9, the printed image position detection unit 10, a second fixation unit 8b, and the scanner unit 11. The first fixation unit 8a includes the first drying unit 40a and the first cooling unit 50a. The second fixation unit 8b includes the second drying unit 40b and the second cooling unit 50b. The first main conveyance unit 4 rotates by driving a motor not illustrated while applying a sheet tension between itself and the second main conveyance unit 12 to thereby convey the sheet S under tension.

The meandering correction unit 5 corrects meandering of the sheet S in the sheet width direction during its conveyance under tension. In the present embodiment, the meandering correction unit 5 has the first meandering correction unit 5a provided upstream of the first printing stage on the conveyance path, and a second meandering correction unit 5b provided upstream of the second printing stage on the conveyance path. The meandering correction unit 5 includes meandering correction rollers and meandering detection sensor not illustrated that detect meandering of the sheet S. The meandering correction rollers change the tilt of the sheet S with motors not illustrated based on the results of measurement by the meandering detection sensors to correct the meandering of the sheet S. At this time, the sheet S is wrapped over the meandering correction rollers. This enhances the meandering correction function.

The conveyance detection unit 6 is a unit that detects the conveyance speed of the sheet S and marks printed on the sheet S in advance in order to control the image forming timing for the printing unit 7. In the present embodiment, the conveyance detection unit 6 has the first conveyance detection unit 6a provided upstream of the first printing stage on the conveyance path, and a second conveyance detection unit 6b provided downstream of the first printing stage but upstream of the second printing stage on the conveyance path. The conveyance speed of the sheet S and the marks detected by the first conveyance detection unit 6a will be used to control the image forming timing for the first printing unit 7a. The conveyance speed of the sheet S and the marks detected by the second conveyance detection unit 6b will be used to control the image forming timing for the second printing unit 7b.

The image forming unit (printing unit) 7 includes print heads 22 for respective ink colors that perform inkjet printing with respective color screens from above the conveyed sheet S. The conveyance path at the image forming unit (printing unit) 7 is formed by guide rollers 23 disposed in an arc shape bulging upward. There, a constant tension is applied to the sheet S to leave a clearance between itself and the print heads 22. The print heads 22 are arrayed along the conveyance direction. Each of the print heads 22 is, for example, a full-line print head in which ejection ports for ejecting an ink are arrayed over a length equivalent to the width of the print medium. In the present embodiment, a total of two print heads for a white (W) ink and a reaction liquid are present at the first printing unit 7a. A total of eight print heads for four colors of black (K), yellow (Y), magenta (M), and cyan (C) and additionally for a reaction liquid and three spot colors are present at the second printing unit 7b. Each reaction liquid is a liquid containing a component that increases the viscosity of the ink(s). Here, increasing the viscosity of an ink means to bring the color material, the resin, etc. forming the ink into contact with a component that increases the viscosity of the ink to thereby induce a chemical reaction or physical adsorption leading to a state where the viscosity of the ink is raised. Increasing the viscosity of an ink is not limited to raising the viscosity of the entire ink but also includes locally raising the viscosity as a result of partial aggregation of the ink's constituent component such as its color material, resin, etc. The component that increases the viscosity of the ink may be a metallic ion, a polymeric aggregation agent, or the like. While the component is not particularly limited, it is possible to use a substance that induces a change in the pH of the ink to aggregate the color material in the ink, and an organic acid is usable. Applying the reaction liquid onto the sheet S before the application of the ink(s) enables the ink(s) to be fixed to the sheet S as soon as it lands on the sheet S. This prevents bleeding in which adjacent inks get mixed. Note that the color types, the number of colors, and the number of print heads 22 are not limited. As for the inkjet method, it is possible to employ a method using heating elements, a method using piezoelectric elements, a method using electrostatic elements, a method using micro-electromechanical systems (MEMS) elements, or the like. The ink of each color is supplied to the corresponding print head 22 through a corresponding ink tube from an ink tank not illustrated.

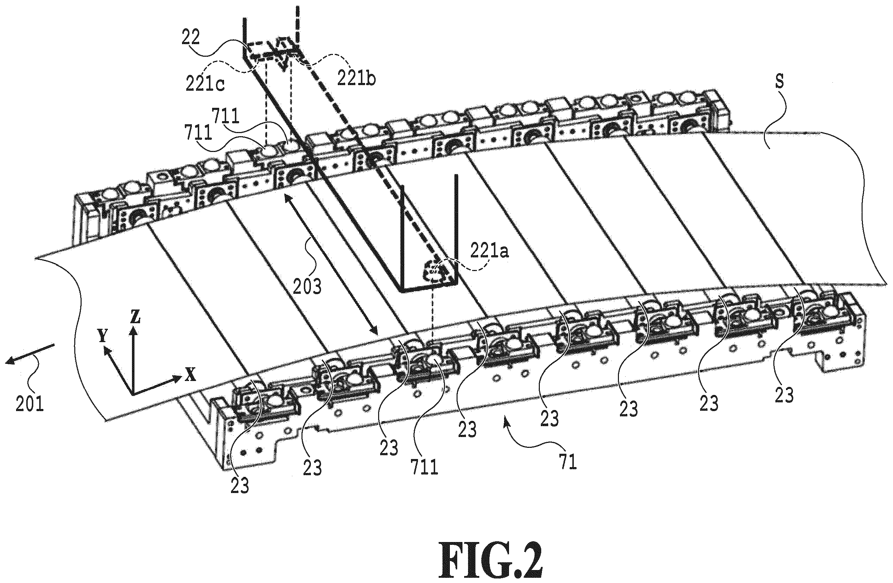

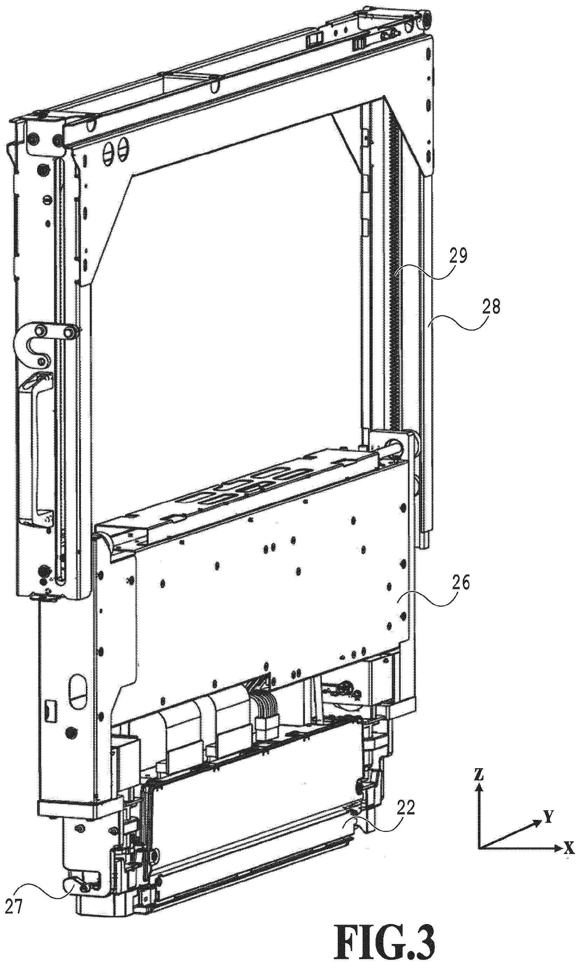

As illustrated in Fig. 2, multiple positioning members 711 for positioning print heads 22 are provided on a sheet conveyance unit housing 71 of the image forming unit (printing unit) 7. The positioning members 711 are on both sides the sheet S, one on the near side in the sheet width direction and two on the far side for each single print head 22. Also, as illustrated in Fig. 3, each print head 22 is pivotally supported such that a head support shaft 27 is supported from below by a head holding unit 26 which holds and vertically raises and lowers the print head 22. The head holding unit 26 performs an operation of moving up and down along raising-lowering rails 29 included in a print head raising-lowering frame 28 with a driving mechanism not illustrated incorporated in the head holding unit 26. Incidentally, in the present embodiment, print heads employing an inkjet printing method are used to apply the inks onto the sheet S, but the method of applying the inks onto the sheet at the printing unit 7 is not particularly limited to this method.

The conveyance tension detection unit 9 detects the tension in the conveyance under tension between the first and second main conveyance units 4 and 12. The printed image position detection unit 10 is a unit that, during printing, detects misalignment of an image formed on the sheet S by the image forming unit (printing unit) 7 to correct the printing.

Wrapping guide rollers R1 are rollers over each of which the opposite surface of the sheet S from its ink application surface at a position downstream of the second printing unit 7b in the conveyance direction is wrapped at a certain wrapping angle. In the present embodiment, two wrapping guide rollers R1 are disposed between the second printing unit 7b and the second drying unit 40b, and the sheet S is bent over such that the portion on the upper side of the apparatus and the portion on the lower side of the apparatus are substantially parallel to each other. The second drying unit 40b is disposed on the lower side of the apparatus relative to the second printing unit 7b.

The drying unit 40 has the first drying unit 40a disposed downstream of the first printing unit 7a in the sheet conveyance direction and the second drying unit 40b disposed downstream of the second printing unit 7b in the sheet conveyance direction. The first and second drying units 40a and 40b reduce the liquids contained in the inks ejected onto the sheet S by the first and second printing units 7a and 7b to enhance the fixability of the inks to the sheet S. The first and second drying units 40a and 40b apply air onto the printed sheet S to dry the inks applied to the sheet S. Inside the first and second drying units 40a and 40b, air is applied to the sheet S passing therethrough at least from the side facing its ink application surface to dry the ink application surface of the sheet S. Incidentally, the drying method may combine the method which applies air with a method which irradiates the surface of the sheet S with electromagnetic waves (such as ultraviolet rays or infrared rays) and/or a conduction heat transfer method which uses contact with a heating body.

The cooling unit 50 has the first cooling unit 50a disposed downstream of the first drying unit 40a in the sheet conveyance direction and the second cooling unit 50b disposed downstream of the second drying unit 40b in the sheet conveyance direction. The first and second cooling units 50a and 50b cool the sheet S to which the inks have been fixed by the first and second drying units 40a and 40b to solidify the soft inks. This reduces the amount of change in the temperature of the sheet S at the downstream stage in the printing apparatus. Inside the first and second cooling units 50a and 50b, air cooler than the sheet S passing therethrough is applied to the sheet S at least from the side facing its ink application surface to cool the ink application surface of the sheet S. Note that the cooling method is not limited to the method which applies air, and may be a conduction heat transfer method which uses contact with a heat dissipation member or a combination of these methods.

The scanner unit 11 is a unit that reads a test image formed on the sheet S by the printing unit 7 before printing for actual production and detects image misalignment and density based on the read test image to correct the printing for the actual production.

The second main conveyance unit 12 conveys the sheet S while applying a tension to the sheet S in cooperation with the first main conveyance unit 4 to adjust the tension on the sheet S. The second main conveyance unit 12 rotates by driving a motor not illustrated and, with a tension control unit not illustrated, controls the speed of the second main conveyance unit 12 according to the value of the tension detected by the conveyance tension detection unit 9. Incidentally, as an additional configuration to adjust the tension on the sheet S, a configuration that adjusts the tension on the sheet S with a clutch (not illustrated) capable of controlling a drivingly coupled torque may be added. As for the tension control method in this case, a torque control method which controls the value of the torque transmitted from the clutch, and a speed control method which controls the roller speed of the second main conveyance unit 12 can be employed, and the tension control method can be switched between these two methods or both can be used according to the purpose.

The second dancer unit 13 applies a constant sheet tension between the second main conveyance unit 12 and the winding roller unit 14. The second dancer unit 13 applies the sheet tension with a tension application unit not illustrated.

The winding roller unit 14 winds up the sheet S after the printing process around a roll core. The number of rolls that can be collected out of the winding roller unit 14 is not limited to one. The winding roller unit 14 may have two roll cores or three or more roll cores and the roll core to collect the sheet S may be alternatively switched. Also, the rotation of the winding roller unit 14 is controlled by a driving motor (not illustrated) alone such that the winding roller unit 14 can be rotated forward and backward. The sheet S is conveyed in the forward direction by controlling the driving motors (not illustrated) for the unwinding roller unit 2 and the winding roller unit 14 to rotate them forward. The sheet S is conveyed in the backward direction by controlling the driving motors (not illustrated) for the unwinding roller unit 2 and the winding roller unit 14 to rotate them backward. In the backward conveyance too, the sheet S is conveyed under tension between the first and second main conveyance units 4 and 12 as in the forward conveyance. Incidentally, depending on the content of the post-printing process, a configuration to cut the sheet S with a cutter and stack the cut sheets may be employed instead of the configuration to wind up the sheet S around a roll core.

A control unit 31 includes a calculation device, such as a central processing unit (CPU) and storage devices, such as memories (a random-access memory (RAM) and a read-only memory (ROM)) and a hard disk drive (HDD). The calculation device executes programs stored in the storage devices to comprehensively control the above-described units and implement the operation flows to be described later. The control unit 31 also has an external interface and an operation unit 32 on which the user performs input-output operations. Operation of the printing apparatus 1 is controlled in accordance with instructions from the operation unit 32 or a host apparatus 33, such as a host computer, connected to the printing apparatus 1 through the external interface.

The maintenance unit 15 has a cap mechanism that protects the ink ejection surfaces of the print heads 22, a wiper mechanism that wipes the ink ejection surfaces, a suction mechanism operation unit that sucks out the inks inside the print heads 22 from the ink ejection surfaces with a negative pressure, and maintains the performance of the print heads 22. The maintenance unit 15 also includes a driving mechanism and a rail not illustrated and is horizontally reciprocally movable along the rail. During maintenance of the print heads, the maintenance unit 15 is moved to immediately under the print heads. While no maintenance operation is not performed, the maintenance unit 15 is moved to such a position as to retract from immediately under the print heads. In the present embodiment, the maintenance unit 15 has a first maintenance unit 15a for the first printing unit 7a and a second maintenance unit 15b for the second printing unit 7b.

Incidentally, a roller R2 is a driven roller disposed downstream of the first fixation unit 8a in the conveyance direction. A roller R3 is a driven roller disposed downstream of the second fixation unit 8b in the conveyance direction.

[Method of Correcting Print Head Misalignment]

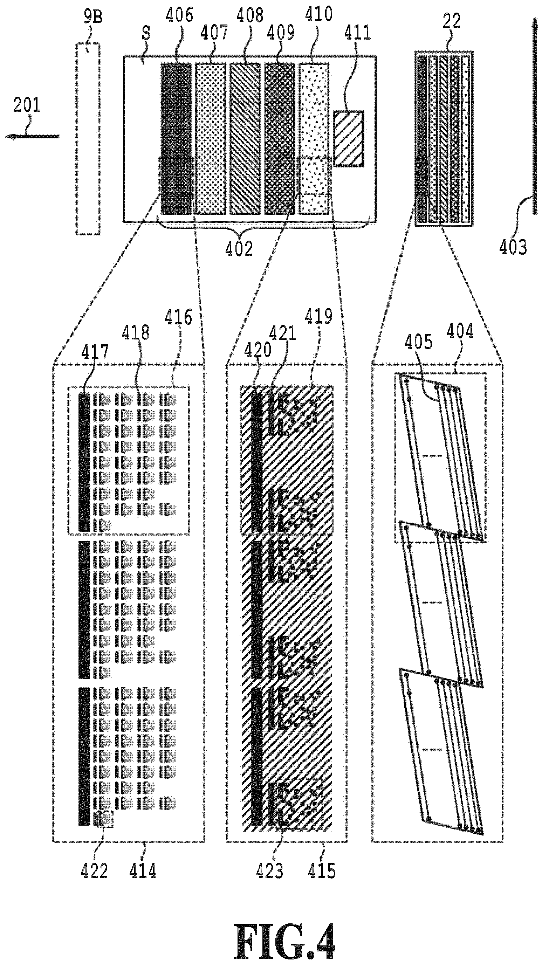

Fig. 4 is a view for explaining a test pattern for correcting print head misalignment according to the present embodiment. Fig. 4 illustrates an example in which a test pattern 402 for correcting head misalignment is printed on a print medium S used as the sheet S. Note that the following description will be given on the assumption that a region covering the test pattern is one page, but this does not mean that this region is cut out, as the sheet S is a continuous sheet, as mentioned earlier. A nozzle array direction 403 indicates the direction in which the nozzles in the print heads 22 are arrayed. That is, the nozzle array direction 403 corresponds to the Y direction illustrated in Fig. 2.

As illustrated in Fig. 1, the printing apparatus 1 includes multiple print heads 22. Each print head is capable of handling color inks of white (W), black (K), cyan (C), magenta (M), and yellow (Y) and also a reaction liquid (primer), which is a colorless clear ink. Some print heads 22 may be empty sockets without the print heads or print heads capable of handling spot colors, such as gray (G), light magenta (LM), and light cyan (LC).

The scanner unit 11 is disposed downstream of the print heads 22 in the conveyance direction of the print medium S. The scanner unit 11 reads the test pattern 402 printed on the print medium S to detect the amounts of misalignment of the print heads 22.

Each print head 22 of the printing apparatus 1 includes multiple print chips. A print chip 404 represents one print chip. In the present embodiment, an example in which each single print chip is formed in a parallelogram shape is illustrated. Each print head 22 includes 17 print chips 404 disposed along the nozzle array direction 403, but the number of print chips is not limited to this number and may be more or less. The nozzle array direction 403 corresponds to a width direction 203 illustrated in Fig. 2. Multiple nozzle arrays 405 are disposed in each print chip 404. In the present embodiment, 16 nozzle arrays 405 are disposed in each print chip 404, but the number of arrays in not limited to this number and may be changed. Also, in the present embodiment, as illustrated in Fig. 4, the nozzle arrays 405 in the print chip 404 are arrayed at a predetermined angle to the conveyance direction. Moreover, the ends of the nozzle arrays 405 are disposed to be tilted with respect to the conveyance direction.

Types of head misalignment will now be described. Each of these misalignments originates from a formation error of chips or nozzles in the print head 22, a placement error of the print head 22, or the like. The types of misalignment include inter-array misalignment being misalignment between the nozzle arrays 405 in a print chip 404, inter-chip misalignment being misalignment between print chips 404, inter-color misalignment being misalignment between print heads 22, and so on. In a case where these misalignments occur, the landing positions of ink droplets shift from ideal positions, thereby deteriorating the quality of the printed image. Head misalignment correction is a function of correcting the ink landing positions by changing the ink ejection timing for the print chip(s) 404 or changing the nozzles to eject the ink(s).

In the present embodiment, misalignment in the direction perpendicular to the nozzle array direction 403 (conveyance direction 201) is addressed by correcting misalignment of formed dots through changing the ejection timing for each print chip 404 forming the print head 22. Misalignment in the nozzle array direction 403 is corrected by changing the ejection data.

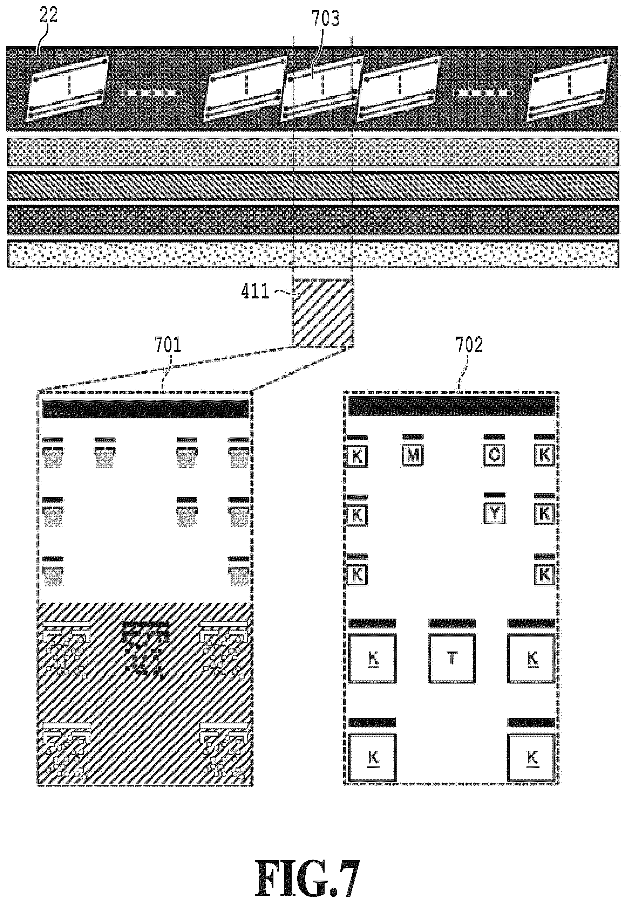

The test pattern 402 is a test pattern for correcting misalignment of print heads 22. The test pattern 402 includes test patterns 406 to 410 corresponding to five print heads 22. Each of the test patterns 406 to 410 is used to detect the amount of misalignment of the corresponding print head 22. Each of these test patterns is used to calculate the amount of inter-array misalignment between the nozzle arrays in each of the print chips in the corresponding print head 22, and the amount of inter-chip misalignment between the print chips. In the present embodiment, the test patterns 406 to 410 are test patterns for the print heads 22 for the K, C, M, Y, and primer inks, respectively. The number of test patterns for print heads 22 included in the test pattern 402 may be changed from five, and the order of the test patterns may be changed. Thus, the number of test patterns may be changed according to the number of print heads 22 to be tested. Incidentally, a test pattern 411 is a test pattern for calculating the amount of inter-color misalignment between the print heads 22. The test pattern 411 will be described in detail later using Fig. 7.

In the present embodiment, a pattern 414 being an enlarged version of a part of the test pattern 406 for the ink color K is illustrated in Fig. 4. Enlarged patterns of the test patterns 407 to 409 for the ink colors C, M, and Y (not illustrated) also have similar configurations to that of the test pattern 406. A pattern 415 being an enlarged version of a part of the test pattern 410 for the primer ink is illustrated as well. Note that these patterns are an example, and the correspondence relationship between the test pattern and the ink color for each type of print head 22 may be changed.

As the pattern 415, a pattern with some parts made larger than those in the pattern 414 is used. Also, while the difference in luminance value between the base color of the print medium S and the primer ink alone, which is a printing material, is small, the following process is performed in order to ensure the detection accuracy. Specifically, the K ink is evenly applied to the entirety of the hatched region of the pattern 415 including regions overlapping detection marks 420, alignment marks 421, and pattern matching patterns 423. This creates differences in detected luminance at the portions of the detection marks 420, the alignment marks 421, and the pattern matching patterns 423 with the primer ink. Also, a pattern 416 is a pattern corresponding to one print chip 404 included in the print head for the ink color K, C, M, or Y, and a pattern 419 is a pattern corresponding to one print chip 404 included in the print head for the primer ink.

In each of the patterns 414 and 415, the regions depicted in black are regions printed with the corresponding inks. The regions depicted in white are regions in the base color of the print medium S which are not printed with the inks.

Each print head 22 is configured such that multiple print chips 404 are linearly arrayed along the nozzle array direction 403. For the individual print chips 404 forming each print head 22, patterns 416 or 419 corresponding to the respective print chips 404 are printed linearly in parallel to the nozzle array direction 403.

Configurations of the patterns 416 and 419 corresponding to print chips 404 and a printing method will now be described. One pattern 416 corresponding to one print chip 404 used in a print head 22 that ejects a color ink includes a detection mark 417, alignment marks 418, and pattern matching patterns 422. One pattern 419 corresponding to one print chip 404 used in the print head 22 that ejects the primer ink includes a detection mark 420, alignment marks 421, and pattern matching patterns 423.

The detection marks 417 and 420 are used to detect the patterns corresponding to the print chips 404 in a read image in an image analysis process. The detection marks 417 and 420 are patterns printed in the form of rectangular regions as illustrated in Fig. 4. In the present embodiment, each print chip includes multiple nozzle arrays, as mentioned earlier. The detection marks 417 and 420 are each a pattern printed by ejecting the ink from multiple nozzle arrays. In a case where there are misfiring nozzles, using multiple nozzle arrays for the printing allows nozzles in other nozzle arrays to eject the ink. This reduces missing parts in the detection pattern due to the misfiring nozzles. Accordingly, the detection mark will be stably detected in the image analysis process.

The alignment marks 418 and 421 are used to calculate reference positions in analysis regions for the pattern matching patterns 422 and 423 in the image analysis process. The alignment marks 418 and 421 are printed in the form of rectangular regions as illustrated in Fig. 4. The alignment marks 418 and 421 are each printed for one pattern matching pattern 422 or 423 corresponding to a nozzle array by ejecting the ink from multiple nozzle arrays.

The pattern matching patterns 422 and 423 are patterns for detecting misalignment of the print heads 22 in the image analysis process. The pattern matching patterns 422 and 423 are each used according to the printing color and the type of the misalignment amount to be calculated.

With patterns formed with the primer ink, the signal difference between the luminance values of the base color of the print medium S and the printing color (clear) tends to be small. That is, it is difficult to detect a difference in luminance value between the base and the ink. Thus, in the present embodiment, for the clear ink, the pattern matching patterns 423, which are made larger than the pattern matching patterns 422, are used to detect misalignment.

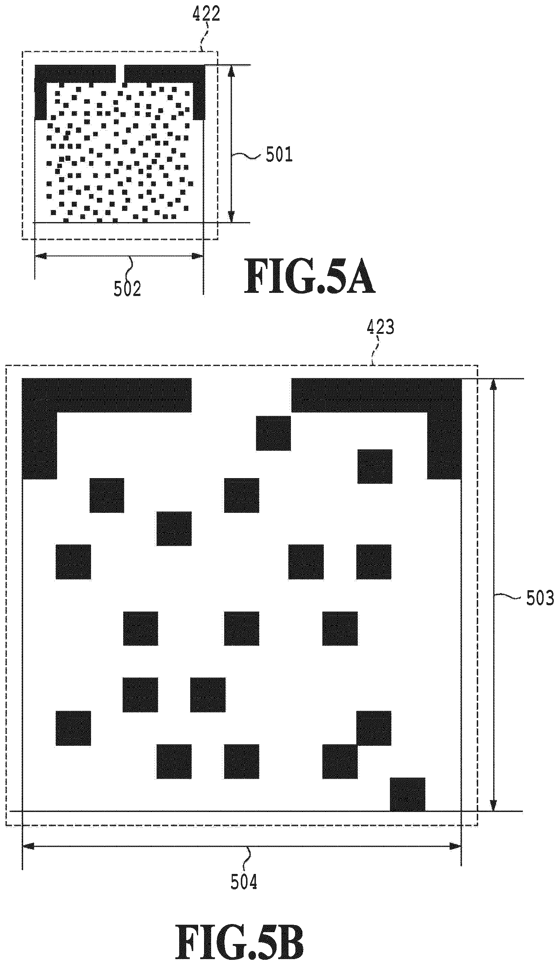

Figs. 5A and 5B are diagrams illustrating detailed layouts of the pattern matching patterns 422 and 423. In Figs. 5A and 5B, reference sign 501 represents the number of pixels in the pattern matching pattern 422 in the vertical direction, and reference sign 502 represents the number of pixels in the pattern matching pattern 422 in the horizontal direction, reference sign 503 represents the number of pixels in the pattern matching pattern 423 in the vertical direction, and reference sign 504 represents the number of pixels in the pattern matching pattern 423 in the horizontal direction,

In the present embodiment, reference signs 501 and 502 around the pattern matching pattern 422 denote directions parallel to the conveyance direction 201 and the nozzle array direction 403, respectively, and each measure 82 pixels in units of 1200 dots per inch (DPI). Reference signs 503 and 504 around the pattern matching pattern 423 denote directions parallel to the conveyance direction 201 and the nozzle array direction 403, respectively, and each measure 210 pixels in units of 1200 DPI.

Note that the number of pixels forming each pattern matching pattern is not limited to the above, and another number may be used. As illustrated in Figs. 5A and 5B, the pattern matching pattern 422 is smaller in size than the pattern matching pattern 423.

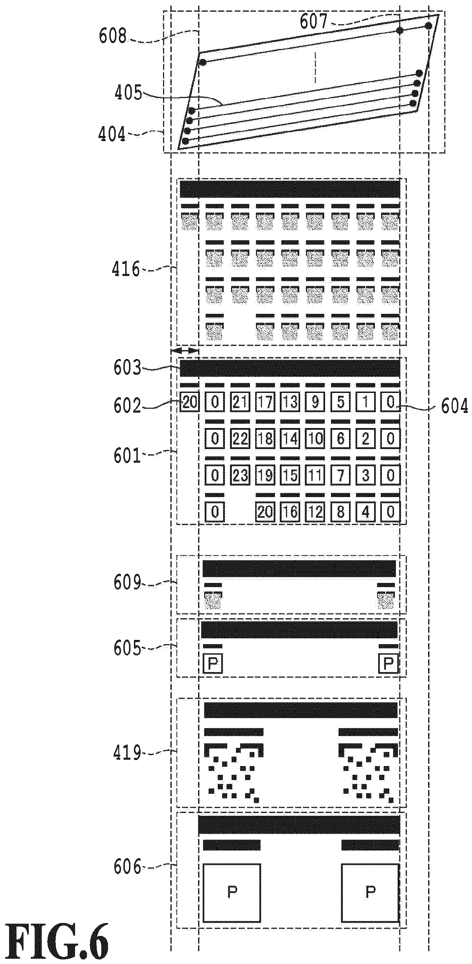

Fig. 6 is a diagram illustrating the correspondences between the patterns 416 and 419 corresponding to one print chip 404 and its ejection nozzles. Note that the other print chips forming the print head 22 have configurations similar to that of the print chip 404.

The print chip 404 includes multiple nozzle arrays 405. In the present embodiment, 24 nozzle arrays 405 are disposed in one print chip 404. The test pattern for one print chip 404 is printed by using the nozzles in the range indicated by dashed lines 607 and 608 in each nozzle array included in the print chip 404. This range may vary depending on the configuration of the print chip 404.

The pattern matching patterns included in the pattern 416 for one print chip 404 each correspond to one of the multiple nozzle arrays. Here, each pattern matching pattern is printed using a nozzle array with a corresponding number. Specifically, pattern matching patterns 0 to 23 are provided for 24 nozzle arrays, respectively. Based on the nozzle pattern arrangement in a layout 601, misalignment is calculated from the relative positions of the pattern matching patterns denoted as "0" (i.e., the nozzle array assigned "0") as reference patterns and the remaining nozzles. A pattern matching pattern 602 is provided as an exception. This is a pattern matching pattern to be printed by a nozzle array assigned "20" among the nozzles included in the next print chip 404 on the left. Note that the nozzle array in the adjacent print chip that prints the pattern matching pattern 602 is not limited to the nozzle array assigned "20", and may be changed depending on the number of nozzle arrays forming each print chip 404, the shape of the print chip 404, and the like.

The pattern matching pattern 602 is not a pattern printed by the print chip of interest, and will therefore not be used in the calculation of the misalignment of the nozzle arrays in the print chip of interest. One pattern 416 is printed for one print chip 404, and the misalignment of the print chip 404 due to a manufacturing error and the tilt of the print head 22 are calculated from one of the pattern matching patterns for one nozzle array in the print chip 404. The inter-chip misalignment between print chips and the tilt of the print head 22 are calculated with the print chip corresponding to the second pattern 416 at the left or right end printed on the print medium S as a reference chip.

Note that the size of the print medium S is variable. Thus, the pattern 416 at the left or right end of the print medium S may sometimes be printed only partly. In a case where such a pattern is printed over the length of a detection mark 603 or longer, a pattern matching pattern 604 is selected for the right end as a pattern for calculation, and the pattern matching pattern 602 is selected for the left end as a pattern for calculation.

Depending on the print head, the layout of the test pattern for each single print chip may be such that a pattern matching pattern 422 is present only at either end as indicated by a pattern 609, instead of the pattern 416. Each of these pattern matching patterns 422 corresponds to nozzles in a layout 605. Reference sign P in the layout 605 means to print the pattern matching pattern 422 with multiple nozzles, which is used to calculate the tilt of the print head.

Each pattern matching pattern 423 in the pattern 419 for one print chip 404 corresponds to nozzles that print a region 606. Reference sign P in the region 606 means to print the pattern matching pattern 423 with multiple nozzles, which is used to calculate the tilt of the print head.

Each of the patterns 416 and 419 for one print chip 404 is printed with the timing of printing on the print medium S shifted by an amount taking into account the manufacturing error of its nozzle(s) and the manufacturing error of the print chip. This keeps the test patterns from overlapping each other due to the errors.

Fig. 7 is a diagram illustrating the correspondence between the test pattern for performing a calculation for correcting inter-color misalignment between print heads 22 and a print chip 404. A test pattern 701 is a test pattern for calculating a positional error between print heads 22. Here, the pattern is printed by the print heads for the printing colors indicated in a layout 702. One print chip 404 in each print head is selected as a print chip to be used to print the pattern. In this example, the print chip in each print head at the position of a print head 703 is selected. In the present embodiment, the print chip 703 is used to print the pattern. In the test pattern 701, the portions depicted in black are the pattern portions printed in the corresponding printing colors (inks), and the portions depicted in white are the paper white (base) portions of the print medium S. The hatched region represents a region to which the K ink is solidly applied (covering a later-described pattern region T).

In the present embodiment, pattern matching patterns 422 are used for the printing with the inks denoted as K, C, M, and Y. A pattern matching pattern 423 is used for the printing with the primer ink denoted as T. As illustrated in the layout 702, the pattern is printed with the print head that ejects the K ink as a reference head, and the misalignment of each print head is calculated with the pattern thus printed. As the pattern for the reference head, a pattern similar to the pattern matching patterns for the printing colors for which to calculate misalignment is used. It is an inverted pattern K (underlined) with the K ink solidly applied to its periphery. The pattern matching patterns for the above colors are not limited to those illustrated in Figs. 5A and 5B and Fig. 7, and different patterns may be used.

The test pattern 701, which is used to calculate the inter-color misalignment between the print heads 22, is printed with the timing of printing on the print medium S shifted by an amount greater than the maximum amount of inter-color misalignment between print heads. Shifting the printing timing for each print head in this manner keeps the test patterns from overlapping one another.

(Calculation of Amount of Misalignment between Nozzle Arrays)

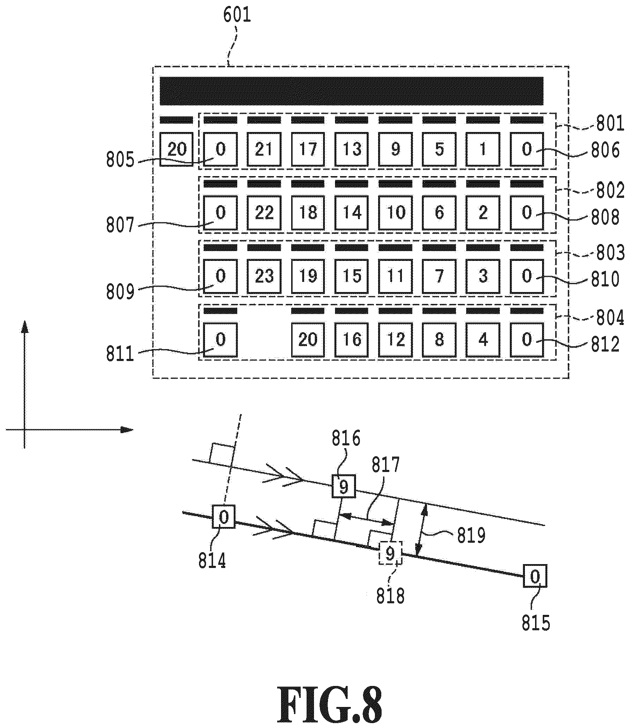

Fig. 8 is a diagram illustrating a method of calculating the amount of misalignment between nozzle arrays. In the present embodiment, 24 nozzle arrays are disposed in one print chip 404. Here, each nozzle array is numbered with the first nozzle array from the downstream side in the conveyance direction 201 of the print medium defined as the 0th array and the last nozzle array as the 23rd array. In the following, these nozzle arrays will be referred to as "nozzle arrays 0 to 23", respectively.

The method of calculating the amount of misalignment between nozzle arrays will be described using a scan image obtained by reading a pattern printed based on the test pattern layout 601 with the scanner. In the test pattern layout 601, the numerical value indicated inside each rectangle represents the number assigned to the nozzle array that was used to print the corresponding pattern matching pattern. For example, a pattern matching pattern 805 represents it was printed with the nozzle array 0. In the following, a printed pattern using a nozzle array x will be referred to as "array-x pattern".

The test pattern layout 601 is divided into four regions 801 to 804. In the region 801, array-0 patterns 805 and 806 serve as reference patterns. Similarly, in the regions 802, 803, and 804 too, array-0 patterns 807 and 808, array-0 patterns 809 and 810, and array-0 patterns 811 and 812 serve as reference patterns, respectively. In each of the regions 801 to 804, the amounts of misalignment between the two array-0 patterns serving as reference patterns and the printed patterns using the other nozzle arrays are calculated.

As an example, a method of calculating the amount of misalignment between the nozzle arrays 0 and 9 will be discussed. A printed pattern 814 corresponds to the array-0 pattern 805 in the region 801, and a printed pattern 815 corresponds to the array-0 pattern 806 in the region 801. Each of them is an array-0 pattern serving as a reference pattern. A printed pattern 816 is an array-9 pattern printed in the region 801.

In a case where the nozzle arrays 0 and 9 print the patterns with no misalignment of the landing positions of the ejected ink at all, the array-9 pattern is printed on a straight line connecting the printed patterns 814 and 815. In such a case with no misalignment of the landing positions at all, an array-9 pattern 818 is printed at an ideal position. The printed pattern 816, on the other hand, indicates the actual printing position of the array-9 pattern.

The amount of misalignment between the printed patterns 816 and 818 is the amount of misalignment of the nozzle array 9 from the nozzle array 0. This amount of misalignment is represented by a misalignment amount 817 as a horizontal component and a misalignment amount 819 as a vertical component. The misalignment amount 819 as the vertical component is the length of a perpendicular drawn from the printed pattern 816 to the straight line connecting the printed patterns 814 and 815. Thus, the misalignment amount 819 as the vertical component can be calculated from the positions of the printed patterns 814, 815, and 816. The amount of misalignment 817 as the horizontal component can likewise be derived from these positions.

By employing the method described above, it is possible to calculate the amounts of misalignment of the array-1 to array-23 patterns with the array-0 patterns as reference patterns and derive the amounts of misalignment of the nozzle arrays 1 to 23 from the nozzle array 0.

(Calculation of Amount of Misalignment between Print Chips and Amount of Tilt of Print Head)

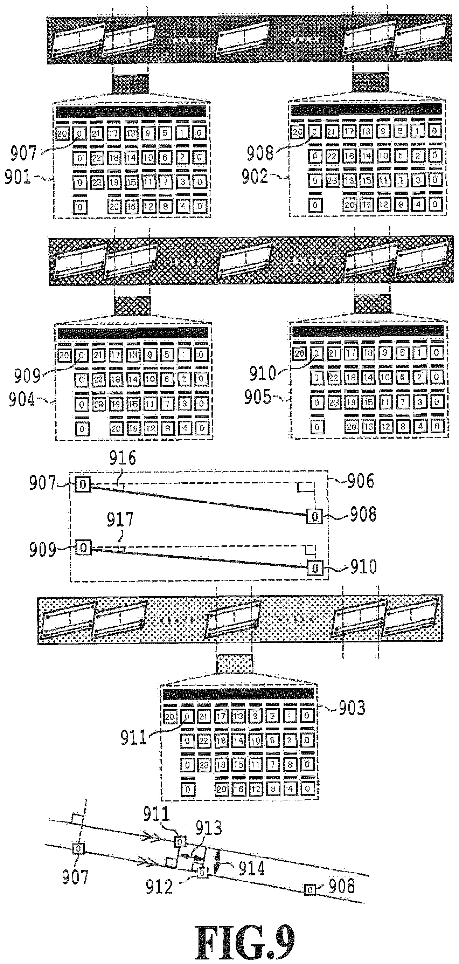

Fig. 9 is a diagram for explaining a method of calculating the amount of misalignment between print chips 404 and a method of calculating the amount of tilt of a print head 22. In the present embodiment, 36 print chips 404 are disposed in one print head 22, and each print chip is numbered with the first print chip from the far side of the apparatus defined as "print chip 0" and the last one as "print chip 35". In Fig. 9, the right side is the far side of the apparatus, and the left side is the near side of the apparatus. A method of calculating the amount of misalignment between print chips using a scan image obtained by reading a pattern printed based on the layout 601 of the pattern 416 with the scanner will be described using Fig. 9.

Printed patterns 901 to 903 are patterns printed based on the layout 601 by using three print chips in a print head 22. There can be print chips that do not perform printing on the print medium S depending on the size of the print medium S and its conveyance error. In the following, a pattern printed on the print medium S by using a print chip x will be referred to as "chip-x pattern".

The printed pattern 901 is a pattern printed by the second print chip toward the right from the left end among the patterns printed on the print medium S. The print chip number for printing the printed pattern 901 varies depending on the size of the print medium S and the like. In the present embodiment, the printed pattern 901 is referred to as "chip-34 pattern". The printed pattern 902 is a pattern printed by the second print chip toward the left from the right end among the patterns printed on the print medium S. In the present embodiment, the printed pattern 902 is referred to as "chip-1 pattern". The printed pattern 903 represents the layout 601 of a pattern corresponding to a print chip for which to calculate the amount of inter-chip misalignment. The following description will be given by taking the print chip 18 as the target as an example. This print chip 18 is a print chip located at the center of the print chip array in the print head 22.

A printed pattern 907 is a pattern in the printed pattern 901 printed using the nozzle array 0 in the print chip 34. A printed pattern 908 is a pattern in the printed pattern 902 printed using the nozzle array 0 in the print chip 1. The print chips which printed these are the reference chips for calculating the misalignment between print chips. A printed pattern 911 is a pattern printed using the nozzle array 0 in the print chip 18, which is a chip for which to calculate the amount of inter-chip misalignment.

In a case where the printed patterns are printed by the nozzle arrays 0 in the print chips 1, 18, and 34 with no misalignment of the landing positions at all, the chip-18 pattern printed by the print chip 18 is on a straight line connecting the printed patterns 907 and 908. A printed pattern 912 indicates the position of the chip-18 pattern printed at an ideal position with no misalignment of the landing position of the ejected ink at all. The printed pattern 911, on the other hand, indicates the actual printing position of the chip-18 pattern.

The misalignment between the printed patterns 911 and 912 is assumed to be misalignment of the relative positions of a straight line connecting the print chips 1 and 34 and the print chip 18, and the amount of this misalignment will be referred to as "misalignment amount 914". The misalignment amount 914 is the length of a perpendicular drawn from the printed pattern 911 to the straight line connecting the printed patterns 907 and 908. Thus, the misalignment amount 914 can be derived from the positions of the printed patterns 907, 908, and 911. Also, a misalignment amount 913 can be derived by calculating the distance between a line passing through the printed pattern 911 and perpendicularly crossing the straight line connecting the printed patterns 907 and 908 and a line passing through the printed pattern 912 and perpendicularly crossing the straight line. Thus, the amount of misalignment in the direction perpendicular to the straight line connecting the printed patterns 907 and 908 can be used to correct the printing position.

By employing the above-described method, it is possible to derive the amount of misalignment of each print chip situated between the two print chips around the left and right ends serving as reference chips from the straight line connecting the reference chips. Note that different calculation methods are used for the print chips located farther on the end sides than are the two reference chips (the print chips 34 and 1 in the illustrated example), i.e., the print chips at the very left and right ends.

In this example, of the two print chips used as the reference chips, the one around the left end is the print chip 34 and the one around the right end is the print chip 1. Thus, there are a printed pattern 911 for the print chip 35 at the left end as an adjustment target, and a printed pattern 911 for the print chip 0 at the right end as an adjustment target. The amount of misalignment of the print chip at the left end is calculated using the pattern matching pattern 604 in the layout 601, as with the other print chips. For the print chip at the right end, on the other hand, the pattern matching pattern 602 formed by the next print chip on the left is used instead of the pattern matching pattern 604. This is because of a possibility that the print chip at the end may only be able to print the layout 601 halfway in length on the print medium S.

Depending on the length of the print medium S, print chips may be present outward of the print chips at the left and right ends of the printing range. Since these print chips cannot perform printing on the print medium S, it is impossible to detect their patterns. Thus, for the print chip on the outer side at the left end, the amount of misalignment of the next chip on the right is used as the correction value. Similarly, for the print chip on the outer side at the right end, the amount of misalignment of the next chip on the left is used as the correction value.

A method of calculating the amount of tilt of a print head 22 with a scan image of patterns printed based on the layout 601 will be described using Fig. 9. The calculation of the amount of tilt of a print head 22 uses patterns similar to those for calculating the amount of misalignment between print chips 404. Regarding the tilt of a print head 22, the amount of tilt relative to a reference head will be regarded as an amount of misalignment. A tilt correction amount is calculated for each print head other than the reference head.

Reference sign 906 represents a diagram for explaining the method of calculating the amount of tilt of a print head 22. First, the amount of tilt of the reference head is calculated. Printed patterns 907 and 908 are printed patterns formed by the reference chips around the left and right ends described above. An angle 916 represents the angle formed by a straight line connecting the printed patterns 907 and 908 and an ideal line with no landing position misalignment due to a tilt of the print head 22, and indicates the amount of tilt of the reference head.

Next, the amount of tilt of the correction target print head is calculated. Printed patterns 909 and 910 are printed patterns formed by the above-described reference chips around the left and right ends of the correction target print head. An angle 917 represents the angle formed by a straight line connecting the printed patterns 909 and 910 and an ideal line with no landing position misalignment due to a tilt of the print head 22, and indicates the amount of tilt of the correction target print head.

Lastly, a calculation amount for correcting the tilt of the correction target print head is calculated. The amount of tilt of the correction target print head can be calculated by the following equation. This amount of tilt of the print head is represented in terms of an angle.

$$\text{Amount of Tilt of Correction Target Print Head} = \text{Angle } 917 - \text{Angle } 916$$

In the present embodiment, the print head 22 that uses the K ink for printing among the print heads 22 is the reference head. By employing the method described above, it is possible to derive the amount of tilt of each print head other than the reference head (K print head) relative to the reference head.

(Calculation of Amount of Misalignment between Print Heads (Inter-color Misalignment))

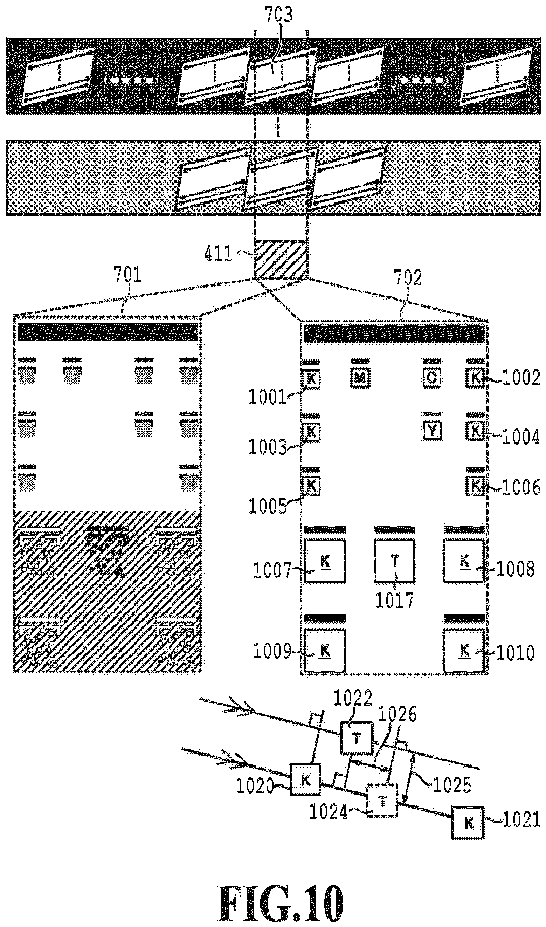

Fig. 10 is a diagram for explaining a method of calculating the amount of misalignment between print heads. In the present embodiment, the print head that ejects the K ink, which is the first print head from the downstream side in the conveyance direction 201 of the print medium S, will be referred to as "print head K", and the print heads that eject the C, M, and Y inks will be referred to as "print head C", "print head M", and "print head Y", respectively. Also, each print head that ejects the clear ink will be referred to as "print head T". A description will be given of a method of calculating the amount of misalignment between print heads (hereinafter referred to as "inter-color misalignment") using a scan image obtained by reading a pattern printed based on the layout 702 for the test pattern 701 with the scanner.

The test pattern 701 is a test pattern for use in calculating the amount of inter-color misalignment. The test pattern 701 is printed using the print chip 703 at a predetermined position in each of the print heads 22 for the predetermined colors indicated in the layout 702. In the present embodiment, the chip 18 is used as the print chip 703 at the above predetermined position. Printed patterns 1001 to 1010 are patterns printed by the reference head and, in the present embodiment, printed by the print head K. The patterns of the other printing colors are patterns of colors for which to calculate misalignment between print heads. In the present embodiment, these patterns are C, M, Y, and T (primer ink) patterns, but the number of printing colors may be changed. In the present embodiment, there are spare regions to additionally put patterns by other print heads.

In the present embodiment, C, M, and Y heads perform printing by using the configuration of the pattern matching pattern 422 illustrated in Fig. 5A. The K printed patterns 1001 to 1006 serving as reference patterns for these are also printed using the configuration of the pattern matching pattern 422.

A printed pattern 1017 is printed with the primer ink by using the configuration of the pattern matching pattern 423 illustrated in Fig. 5B. The printed patterns 1007, 1008, 1009, and 1010, which are K patterns serving as reference patterns for the printed pattern 1017, are printed using the configuration of the inverted pattern K (underlined) being an outlined version of the pattern matching pattern 423 as described with reference to Fig. 7. The head whose inter-color misalignment from the reference head is to be calculated uses a pattern matching pattern of the same size.

In the present embodiment, in the calculation of the amounts of misalignment between the print head K (reference head) and the other print heads, a similar method is used for each print head. In the following, a method of calculating the amount of misalignment between the print head K and the print head T (primer ink) will be described as an example.

A printed pattern 1020 corresponds to the printed pattern 1007, and a printed pattern 1021 corresponds to the printed pattern 1008. These are reference head patterns printed by the print chip 18 in the print head K. A printed pattern 1022 is a pattern corresponding to the printed pattern 1017 and printed by the print chip 18 in the print head T, and is a printed pattern printed by the print head whose amount of misalignment is to be calculated.

In a case where the printed patterns by the print heads K and T are printed with no misalignment of the landing positions of the ejected inks at all, the patterns are disposed such that the printed pattern by the print head T is on a straight line connecting the printed patterns 1020 and 1021. A printed pattern 1024 indicates the position of the printed pattern by the print head T printed at an ideal position with no misalignment of the landing position of the ejected ink at all. The printed pattern 1022, on the other hand, indicates the actual printing position of the chip-18 pattern.

In the present embodiment, the misalignment between the printed patterns 1022 and 1024 in the scan image is assumed to be misalignment of the print head T relative to the print head K. The amount of this misalignment will be referred to as "misalignment amount 1025". The misalignment amount 1025 is the length of a perpendicular drawn from the printed pattern 1022 to the straight line connecting the printed patterns 1020 and 1021. Thus, the misalignment amount 1025 can be derived from the positions of the printed patterns 1020, 1021, and 1022. Also, the distance between a line passing through the printed pattern 1022 and perpendicularly crossing the straight line connecting the printed patterns 1020 and 1021 and a line passing through the printed pattern 1024 and perpendicularly crossing the straight line is derived. By doing so, a misalignment amount 1026 between the printed patterns 1024 and 1022 can be derived. In the present embodiment, as for the calculation for print head misalignment correction, a correction amount in the direction perpendicular to the misalignment amount 1025 is calculated as well. Accordingly, correction amounts are calculated for the head misalignment amounts in the two directions, namely the misalignment amounts 1025 and 1026.

By employing the method described above, it is possible to derive the amount of inter-color misalignment of each print head other than the print head K relative to the reference head.

(Mark Detection Process)

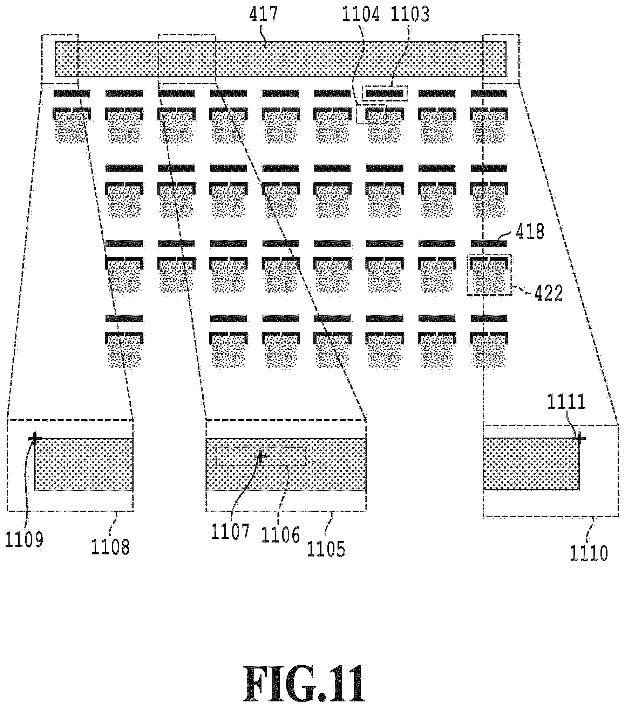

Fig. 11 is a diagram for explaining a mark detection process for a print chip 404. In the present embodiment, a process of detecting the detection mark in each of the patterns for the print chips 404 from a read image of a test pattern for calculating misalignment amounts will be described. Fig. 11 illustrates a pattern for some print chips like the pattern 416 illustrated in Fig. 6.

In the present embodiment, the patterns for the print chips 404 include three types of patterns 416, 419, and 609 illustrated in Fig. 6, and the detection process is performed similarly for each type. Moreover, the detection process is also similar for the test pattern 701 illustrated in Fig. 7, which is for calculating the positional error between print heads 22. The description will be given using the pattern 416 illustrated in Fig. 6 as an example.

The mark detection process mainly includes three steps. In the first step, the detection mark 417 is detected. Based on the detected position of the detection mark 417, the position of the test pattern for the single print chip 404 is estimated.

In the second step, alignment marks 1103 are detected based on the estimated position of the test pattern in the first step. Since the pattern 416 in Fig. 6 is used an example, the alignment marks 1103 are marks similar to the alignment marks 418. These alignment marks 1103 are each printed near a pattern matching pattern. Thus, from the detected positions of the alignment marks 1103, the positions of the corresponding pattern matching patterns are estimated.

In the third step, based on the estimated positions of the pattern matching patterns in the second step, pattern positions are detected by using pattern matching. Since the pattern 416 in Fig. 6 is used as an example, a region 1104 corresponds to a pattern matching pattern 422.

The process of detecting the detection mark 417 in the first step will now be described. In this process, among the luminance values of three RGB channels for a read image which can be read by an inspection unit 9B, the luminance value of the channel with which the printing color of the print head corresponding to the detection target pattern has the highest density is used. For example, the R channel is used in a case the color with the highest density is C (cyan), the G channel is used in a case where the color with the highest density is M (magenta), and the B channel is used in a case where the color with the highest density is Y (yellow). Incidentally, any one of the channels is designated and used in a case of a printing color which has high density with all channels, such as K (black).

Reference sign 1105 represents an enlarged view of a part of the detection mark 417. The detection mark 417 is detected based on the average density of a predetermined region in the read image. A detection mark detection region 1106 is a region to obtain the average density. In a case where the average density obtained from the detection mark detection region 1106 is a predetermined density or more, that region is identified as a detection mark region, and the center position in the region is set as a detection mark detection position 1107. The range of the detection mark detection region and the predetermined density to be used as a threshold may be changed.

Thereafter, the positions of the upper left end and the upper right end of the detection mark 417 are detected. Reference sign 1108 represents an enlarged view of a portion around the upper left end of the detection mark 417, and reference sign 1110 represents an enlarged view of a portion around the upper right end. The region with the predetermined density or more from the detection mark detection position 1107 is scanned. The upper left end of the region with the predetermined density or more is defined as a detection mark upper left end position 1109. Similarly, the upper right end of the region with the predetermined density or more is defined as a detection mark upper right end position 1111.

With a position determined as a start point based on the detection mark upper left end position 1109, the centroid of density of a predetermined region is calculated to estimate an alignment mark detection range. By detecting the detection mark 417 in the pattern 416 in Fig. 4, a range from which to detect the alignment marks 1103 can be estimated. The process of detecting the alignment marks 1103 is similar to the process of detecting the detection mark 417. Regions with a predetermined density or more are scanned, and the centroids of density of the regions are calculated to detect the positions of the alignment marks 1103.

Thereafter, the positions of the pattern matching patterns are estimated. The region 1104 is a region indicating the position of the upper left end of a pattern matching pattern. The result of the detection of the detection mark 417 is used to determine which chip in which print head this pattern corresponds to as a test pattern. After each pattern matching pattern's position is roughly determined through the above process, a position detection process including a pattern matching process is performed to detect the final position in the image. This position of the pattern matching pattern in the image is the position for calculating the distance to be used to calculate various misalignment amounts in head misalignment correction. The above various misalignment amounts are the manufacturing error between nozzle arrays, the manufacturing error between chips, the tilt of the print head, and the misalignment between print heads.

(Process Flow)

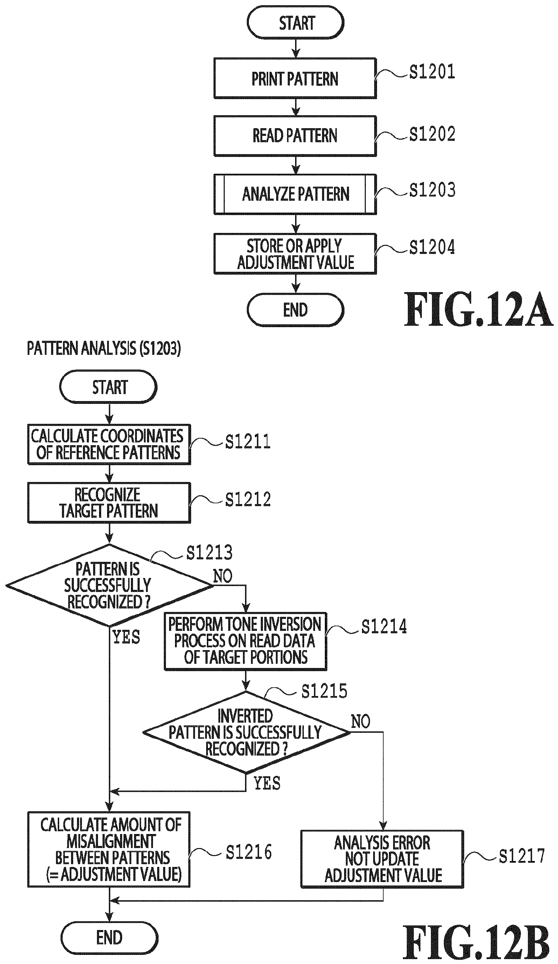

Figs. 12A and 12B are flowcharts illustrating a flow of a printing position adjustment process. Fig. 12A illustrates an entire flow of the printing position adjustment process. Fig. 12B illustrates a detailed flow of a pattern analysis process. The printing position adjustment process in the present embodiment can be performed with any timing selected by the user, such as when the print medium is changed to a different type from the print medium printed last time. As described above, pattern printing and pattern reading are executed, and then pattern analysis is performed. Note that the following analysis flow is implemented with the CPU of the control unit 31 of the printing apparatus 1, which functions as an image processing apparatus implements, but may be implemented with a CPU installed in the scanner unit 11 or the host apparatus 33. Also, the process may be divided and shared by, for example, causing the printing apparatus 1 to perform part of the process and causing the host apparatus 33 to perform the rest of the process.

In S1201, the CPU of the control unit 31 prints the test pattern 402 for the colored materials and the colorless material on the print medium S with the print heads. In S1202, the CPU of the control unit 31 reads the test pattern 402 printed on the print medium S with the scanner unit 11, and obtains the detection marks, the alignment marks, and the pattern matching patterns from the scan image thus obtained (read image). In S1203, the CPU of the control unit 31 analyzes the pattern obtained in S1202. In S1204, based on the analysis result obtained in S1203, the CPU of the control unit 31 updates a printing position adjustment value being an adjustment value for adjusting misalignment between the printing positions of print heads. Specifically, the CPU of the control unit 31 stores or applies the printing position adjustment value. In this way, the printing apparatus 1 can adjust the misalignment between the printing positions of the print heads based on the printing position adjustment value.

(Details of Pattern Analysis)

A detailed flow of the pattern analysis (S1203) will now be described using Fig. 12B. Note that patterns corresponding to a target chip in the test pattern 402 printed on the print medium are detected based on the detection marks 417 and 420 by an image analysis process, as has been described with reference to Fig. 11.

In S1211, the CPU of the control unit 31 identifies the alignment marks and the patterns with a predetermined density as a threshold, and calculates the coordinates of the printed patterns 1007 and 1008 serving as reference patterns. Here, inverted patterns K (underlined) are used, as mentioned with reference to Figs. 7 and 10. For this reason, a value obtained by subtracting the luminance value of any channel read by the inspection unit 9B from, for example, 255 in a case of using 8-bit data, is used as an inverted luminance value.

In S1212, the CPU of the control unit 31 detects the printed pattern 1017 with the primer ink. In S1213, the CPU of the control unit 31 determines whether the pattern recognition process in S1212 was successful. First, the CPU of the control unit 31 roughly determines the position of the printed pattern 1017 by detecting mark positions using inverted luminance values of a reading channel assuming that the detection mark and the alignment marks have lower density than their peripheries like the reference patterns 1007 and 1008. Thereafter, the CPU of the control unit 31 performs a position detection process including a pattern matching process, and determines that the pattern recognition process was successful, for example, in a case where the position detection ends without an error such as a failure to find a region matching the pattern 423. In a case where a determination result indicating a success in detecting the printed pattern 1017 is obtained (YES in S1213), the process proceeds to S1216. In a case where a determination result indicating a failure to detect the printed pattern 1017 is obtained (NO in S1213), the process proceeds to S1214.

In S1214, the CPU of the control unit 31 executes a tone inversion process of inverting the tones in the read data of target portions to thereby generate an inverted image being the read image with inverted density. Specifically, unlike S1212, assuming that the printed pattern 1017 with the primer has higher density than its periphery, the CPU of the control unit 31 performs an analysis using the luminance values of the normal reading channel (opposite from that for the reference patterns 1007 and 1008). As a result, a tone inverted pattern (hereinafter referred to also as "inverted pattern") is obtained.

In S1215, the CPU of the control unit 31 determines whether the inverted pattern is successfully detected. First, the CPU of the control unit 31 roughly determines the position of the printed pattern 1017. Specifically, the CPU of the control unit 31 detects mark positions using the inverted luminance values of the reading channel assuming that the detection mark and the alignment marks have lower density than their peripheries as in the "inverted pattern", which is different from the reference patterns 1007 and 1008 as the luminance values are inverted. By this detection, the position of the pattern 1017 is roughly determined. Thereafter, the CPU of the control unit 31 performs a position detection process including a pattern matching process, and determines that the inverted pattern is successfully detected, for example, in a case where the position detection ends without an error such as a failure to find a region matching the pattern 423. In a case where a determination result indicating a success in detecting the inverted pattern is obtained (YES in S1215), the process proceeds to S1216. In a case where a determination result indicating a failure to detect the inverted pattern is obtained (NO in S1215), the process proceeds to S1217.

In S1216, based on a coordinate analysis between patterns, the CPU of the control unit 31 calculates the amount of misalignment and an adjustment value. As a result, the adjustment value is obtained. In other words, in the case where YES is obtained in S1213, the adjustment value is determined based on the result of the pattern recognition on the read image. In the case where YES is obtained in S1215, the adjustment value is determined based on the result of the pattern recognition on the inverted image.

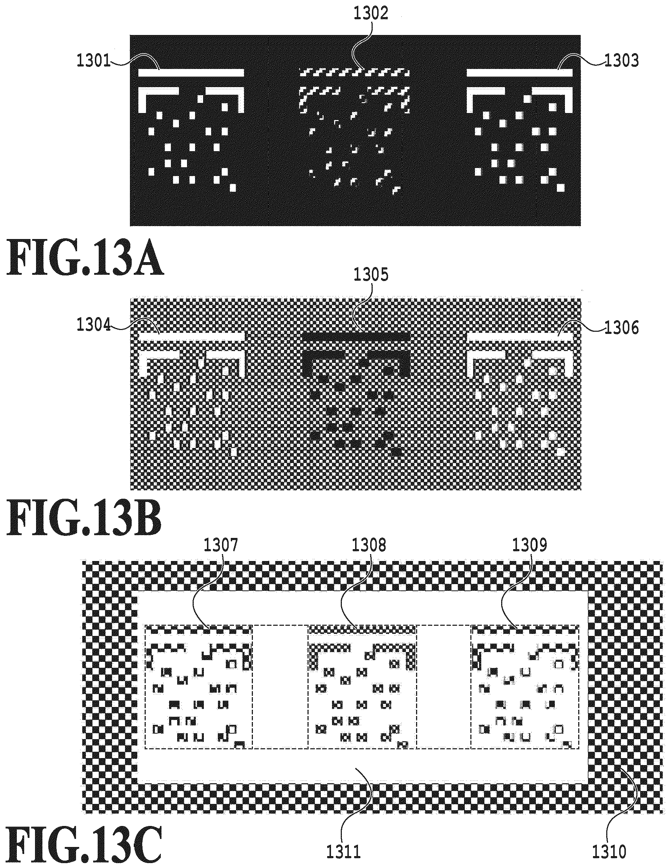

Figs. 13A to 13B are diagrams illustrating parts of test patterns on print media differing in ink permeation characteristics in the present embodiment. Fig. 13A illustrates a case with coated paper, and Fig. 13B illustrates a case with uncoated paper. Note that the method of applying the inks during the printing is completely the same in Figs. 13A and 13B. With the coated paper illustrated in Fig. 13A, the K ink is subsequently applied onto the entire region of a printed primer pattern 1302. Reference patterns 1301 and 1303 are patterns without the K ink. The K ink applied onto the printed primer pattern 1302 having not fully permeated the coated paper flows to the periphery, for example, so that the base of the coated paper, which is the background color, is transparently visible. On the other hand, with the uncoated paper illustrated in Fig. 13B, a printed primer pattern 1305 permeates quickly, so that the subsequently applied K ink does not flow to the periphery. The primer ink chemically reacts with the color ink to improve its color development property. Accordingly, the printed primer pattern 1305 has higher density than the region around it where the primer is not applied.

Fig. 13C is a diagram illustrating an example test pattern with the W ink and the primer for the W ink on a film (such as a transparent film label attached to colored release paper). Reference sign 1310 denotes the film's background color, and reference patterns 1307 and 1309 are formed as patterns with their insides partly removed, as with the Kink. The printed primer pattern 1308 is disposed in the middle to calculate the amount of misalignment of the printing position relative to the W ink. As for the tones in the analysis, the printed primer pattern 1308 is in a state where all luminance values in the test pattern illustrated in Fig. 13A are inverted.

In S1217, the CPU of the control unit 31 determines that an analysis error occurred, and does not update the adjustment value.

After finishing the process of S1216 or S1217, the CPU of the control unit 31 terminates the pattern analysis process illustrated in Fig. 12B.

As described above, in accordance with the present embodiment, it is possible to analyze a printing position adjustment pattern for a colorless clear primer ink regardless of the print medium's permeation characteristics, and accurately adjust misalignment printing positions between print heads.

[Embodiment 2]

In Embodiment 2, how a process is performed in a case where information on a print medium to be printed is obtained will be described using drawings.

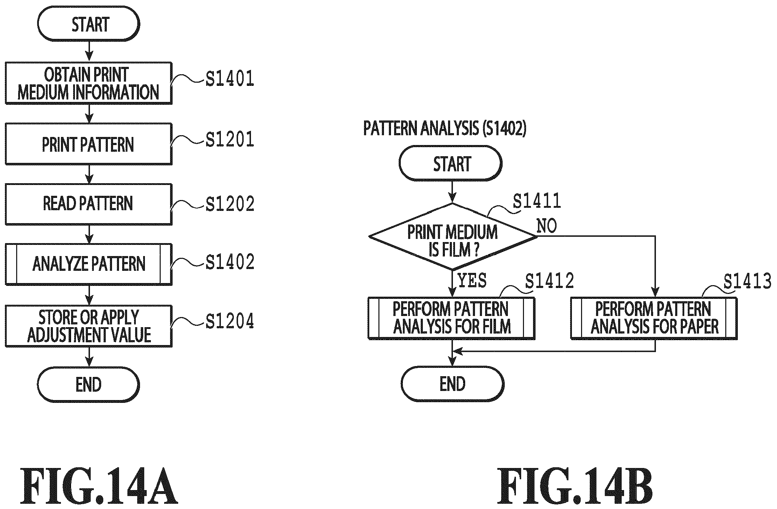

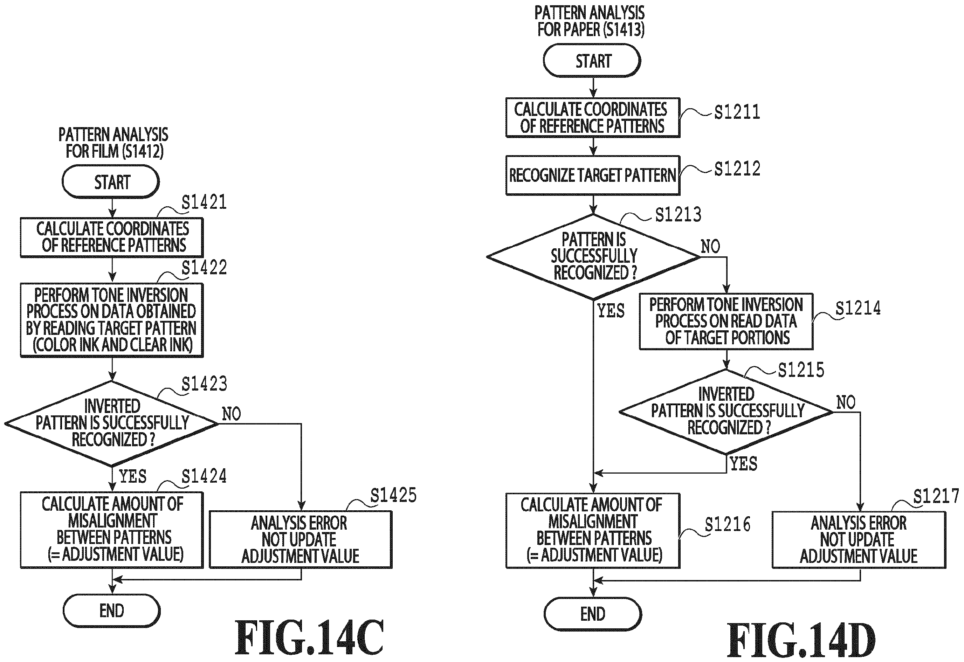

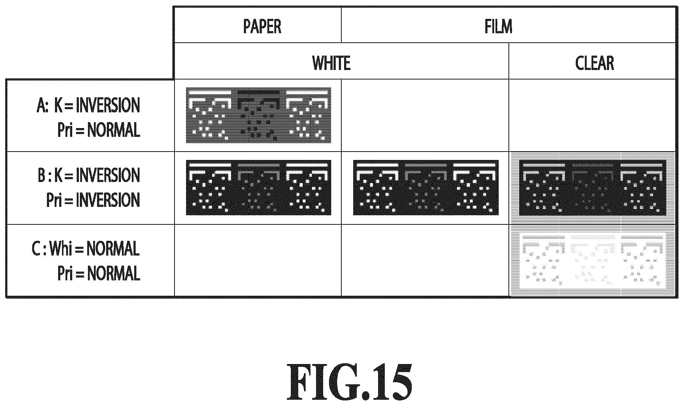

Figs. 14A to14D are flowcharts illustrating a flow of a printing position adjustment process in the present embodiment. Fig. 14A illustrates a flow of the entire printing position adjustment process, and Fig. 14B illustrates details of a pattern analysis process (S1402). Fig. 14C illustrates details of a pattern analysis process for films (S1412), and Fig. 14D illustrates details of a pattern analysis process for paper (S1413). Fig. 15 is a diagram illustrating example analysis target patterns.

(Flow of Printing Position Adjustment Process)

In the present embodiment, its difference from Embodiment 1 will be mainly described.

In S1401, the CPU of the control unit 31 obtains information on the print medium. The CPU of the control unit 31 obtains, for example, information on a print medium designated by a user operation on an user interface (UI) screen displayed on the operation unit 32 (print medium information). For example, in a case where the print target is paper, the CPU of the control unit 31 obtains print medium information indicating that the print target is paper. In a case where the print target is a film, the CPU of the control unit 31 obtains print medium information indicating that the print target is a film.

In S1402, the CPU of the control unit 31 performs a pattern analysis.

(Details of Pattern Analysis)

In the pattern analysis (S1402), first, in S1411, the CPU of the control unit 31 determines whether the print medium information obtained in S1401 is the print medium information indicating that the print target is a film. In a case where a determination result indicating that the print medium information indicating that the print target is a film is obtained (YES in S1411), the process proceeds to S1412. In a case where a determination result indicating that the print medium information indicating that the print target is a film is not obtained (NO in S1411), the process proceeds to S1413. After the process of S1412 or S1413, the CPU of the control unit 31 terminates the flow illustrated in Fig. 14B.

(Details of Pattern Analysis Process for Film)

In S1421, the CPU of the control unit 31 calculates the coordinates of reference patterns, as in S1211. In S1422, the CPU of the control unit 31 performs a tone inversion process of inverting the tones in data obtained by reading a position detection pattern for a color ink and a clear ink which is a target pattern, to thereby generate an inverted image being the read image with inverted density. The process of S1422 is the same as S1214, and detail description thereof is omitted.

In S1423, the CPU of the control unit 31 performs a recognition process on the pattern in the inverted image (inverted pattern). In a case where a determination result indicating that the inverted pattern is recognized is obtained (YES in S1423), the process proceeds to S1424. In a case where a determination result indicating that the inverted pattern cannot be recognized is obtained (NO in S1423), the process proceeds to S1425.

In S1424, based on a coordinate analysis between patterns, the CPU of the control unit 31 calculates the amount of misalignment and an adjustment value, as in S1216. As a result, the adjustment value is obtained. In other words, the adjustment value is determined based on the result of the pattern recognition on the inverted image. In S1425, the CPU of the control unit 31 determines that an analysis error occurred, and does not update the adjustment value, as in S1217. After the process of S1424 or S1425, the CPU of the control unit 31 terminates the flow illustrated in Fig. 14C.

Note that Fig. 14D illustrating a detailed flow of the pattern analysis process for paper (S1413) is the same as the pattern analysis process illustrated in Fig. 12B (S1203), and detailed description thereof is omitted.

<Relationships between Paper and Films, and Patterns>

Fig. 15 is a diagram illustrating relationships between paper and films, and printed patterns. Note that reference sign K denotes use of the black ink, reference sign Pri denotes use of the primer ink, and reference sign Whi denotes use of the white ink. The top row in the table illustrated in Fig. 15 indicates the types of print media to be printed, and indicates a case where these types are paper and film. The second row from the top of the table illustrated in Fig. 15 indicates the colors of the print media, and indicates a case where these colors are white and clear.

As illustrated in Fig. 15, with paper, it can be seen that the pattern will appear as A or B due to its permeability. First, the analysis flow starts on the assumption that A represents the tonal relationship. In a case where it is determined that the primer pattern in the center fails to be recognized, the analysis is performed again on the assumption that B is the tonal relationship. With a film, which is not permeable, the analysis is performed based only on a setting indicating that B is the tonal relationship, instead of a setting indicating that A is the tonal relationship. Performing the analysis based on the setting corresponding to the type of the print medium as described above shortens the time required for the analysis. Incidentally, C represents the position adjustment pattern for the white ink and the primer ink for the white ink to be used on a clear film. In this case, no density inversion is required since the density of the pattern to be recognized is high. Hence, data obtained by the same process as in the normal case is analyzed.

As described above, in accordance with the present embodiment, it is possible to perform an analysis corresponding to the type of the print medium to be printed. In a case where the print medium is a film, a process of recognizing that the print target is a film is not needed, so that the time required for the analysis is shortened accordingly.

In Embodiment 1, an inverted image being a read image with inverted density is generated based on the result of a pattern recognition process. In Embodiment 2, in a case where the print medium is a film, an inverted image is generated by inverting the density of a read image based on print medium information. In a case where the print medium is paper, an inverted image being a read image with inverted density is generated based on print medium information and the result of a pattern recognition process. Thus, an inverted image being a read image with inverted density is generated based on at least one of print medium information or the result of a pattern recognition process. In this way, it is possible to accurately adjust misalignment between the printing positions of print heads. Note that a configuration to switch between the process in Embodiment 1 and the process in Embodiment 2 may be employed. For example, a UI screen may include a region where the user can select between the process in Embodiment 1 and the process in Embodiment 2.

[Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

In accordance with the technology of the present disclosure, it is possible to accurately adjust misalignment between the printing positions of print heads regardless of the print medium's permeation characteristics with a colorless material for fixing a colored material.

**Claims**

1. An image processing apparatus (1) comprising:

an obtaining means (11) for obtaining a read image obtained by reading a pattern for a colored material and a colorless material formed on a print medium (S) by print heads (22); and

a determination means (31) for determining an adjustment value for adjusting misalignment between printing positions of the print heads (22) by generating an inverted image being the read image with inverted density based on at least one of a result of a recognition process on the pattern in the read image or print medium information indicating a type of the print medium (S).

2. The image processing apparatus according to claim 1,
wherein the determination means determines the adjustment value by generating the inverted image based on the result of the recognition process.

3. The image processing apparatus according to claim 2,
wherein the determination means generates the inverted image in a case where the pattern in the read image is not recognizable, and determines the adjustment value based on the pattern in the generated inverted image.

4. The image processing apparatus according to claim 3,
wherein the determination means does not update the adjustment value in a case where the pattern in the inverted image is not recognizable.

5. The image processing apparatus according to any one of claims 2 to 4,
wherein the determination means determines the adjustment value based on the pattern in the read image in a case where the pattern in the read image is recognizable.

6. The image processing apparatus according to claim 1,
wherein the determination means determines the adjustment value by generating the inverted image based on the print medium information.

7. The image processing apparatus according to claim 6,
wherein the determination means generates the inverted image in a case where the print medium information indicates that the print medium is a film, and determines the adjustment value based on the pattern in the generated inverted image.

8. The image processing apparatus according to claim 7,
wherein the determination means does not update the adjustment value in a case where the pattern in the inverted image is not recognizable.

9. The image processing apparatus according to claim 6,
wherein the determination means generates the inverted image in a case where the print medium information indicates that the print medium is paper, and the pattern in the read image is not recognizable, and determines the adjustment value based on the pattern in the generated inverted image.

10. The image processing apparatus according to claim 9,
wherein the determination means does not update the adjustment value in a case where the pattern in the inverted image is not recognizable.

11. The image processing apparatus according to claim 6,
wherein the determination means determines the adjustment value based on the pattern in the read image in a case where the print medium information indicates that the print medium is paper, and the pattern in the read image is recognizable.

12. The image processing apparatus according to any one of claims 1 to 11,
wherein the read image is an image obtained by forming the pattern with the colorless material ejected from one of the print heads, covering the pattern with the colored material ejected from another one of the print head, and then reading the pattern.

13. The image processing apparatus according to any one of claims 1 to 12,
wherein the colorless material is intended to fix the colored material to the print medium.

**14.** The image processing apparatus according to any one of claims 1 to 13,
wherein the print heads are inkjet print heads.

**15.** The image processing apparatus according to any one of claims 1 to 13,
wherein the print heads are full-line print heads in each of which ejection ports through which to eject an ink are arrayed over a length equivalent to a width of the print medium.

**16.** An image processing method comprising:

obtaining a read image obtained by reading a pattern for a colored material and a colorless material formed on a print medium by print heads (S1202) ; and
determining an adjustment value for adjusting misalignment between printing positions of the print heads by generating an inverted image being the read image with inverted density based on at least one of a result of a recognition process on the pattern in the read image or print medium information indicating a type of the print medium (S1203).

**17.** A program for causing a computer to function as each means of the image processing apparatus according to any one of claims 1 to 15.

**18.** A non-transitory computer readable storage medium storing a program according to claim 17.

**FIG.1**

EP 4 484 170 A1

**FIG.2**

29

28

26

22

27

Z

Y

X

FIG.3

**FIG.4**

422

501

502

## FIG.5A

423

503

504

## FIG.5B

**FIG.6**

**FIG.7**

**FIG.8**

FIG.9

**FIG.10**

**FIG.11**

START

PRINT PATTERN — S1201

READ PATTERN — S1202

ANALYZE PATTERN — S1203

STORE OR APPLY
ADJUSTMENT VALUE — S1204

END

# FIG.12A

PATTERN ANALYSIS (S1203)

START

CALCULATE COORDINATES
OF REFERENCE PATTERNS — S1211

RECOGNIZE
TARGET PATTERN — S1212

PATTERN IS
SUCCESSFULLY
RECOGNIZED ? — S1213
NO

PERFORM TONE INVERSION
PROCESS ON READ DATA
OF TARGET PORTIONS — S1214

INVERTED
PATTERN IS SUCCESSFULLY
RECOGNIZED ? — S1215
NO

YES

YES

CALCULATE AMOUNT OF
MISALIGNMENT
BETWEEN PATTERNS
(= ADJUSTMENT VALUE) — S1216

ANALYSIS ERROR
NOT UPDATE
ADJUSTMENT VALUE — S1217

END

# FIG.12B

1302

1301 1303

**FIG.13A**

1305

1304 1306

**FIG.13B**

1307 1308 1309

**FIG.13C** 1311 1310

## FIG.14A

```
        START
          │
          ▼
┌──────────────────────┐
│    OBTAIN PRINT      │───S1401
│ MEDIUM INFORMATION  │
└──────────────────────┘
          │
          ▼
┌──────────────────────┐
│    PRINT PATTERN     │───S1201
└──────────────────────┘
          │
          ▼
┌──────────────────────┐
│    READ PATTERN      │───S1202
└──────────────────────┘
          │
          ▼
┌──────────────────────┐
│   ANALYZE PATTERN    │───S1402
└──────────────────────┘
          │
          ▼
┌──────────────────────┐
│    STORE OR APPLY    │───S1204
│   ADJUSTMENT VALUE   │
└──────────────────────┘
          │
          ▼
         END
```

**FIG.14A**

## FIG.14B

PATTERN ANALYSIS (S1402)

```
              START
                │
                ▼
          ╱──────────╲
         ╱  PRINT     ╲   S1411
        ╱  MEDIUM      ╲─── NO ──────────────┐
        ╲  IS FILM ?   ╱                     │
         ╲            ╱                      │
          ╲──────────╱                       │
                │ YES    S1412                │  S1413
                ▼                             ▼
┌────────────────────────┐      ┌────────────────────────┐
│   PERFORM PATTERN      │      │   PERFORM PATTERN      │
│   ANALYSIS FOR FILM    │      │   ANALYSIS FOR PAPER   │
└────────────────────────┘      └────────────────────────┘
                │                             │
                ▼◄────────────────────────────
              END
```

**FIG.14B**

PATTERN ANALYSIS
FOR FILM (S1412)

START

CALCULATE COORDINATES
OF REFERENCE PATTERNS — S1421

PERFORM TONE INVERSION
PROCESS ON DATA OBTAINED
BY READING TARGET PATTERN
(COLOR INK AND CLEAR INK) — S1422

INVERTED
PATTERN IS SUCCESSFULLY
RECOGNIZED? — S1423
NO

YES — S1424

CALCULATE AMOUNT OF
MISALIGNMENT
BETWEEN PATTERNS
(= ADJUSTMENT VALUE)

ANALYSIS ERROR
NOT UPDATE
ADJUSTMENT VALUE — S1425

END

**FIG.14C**

PATTERN ANALYSIS
FOR PAPER (S1413)

START

CALCULATE COORDINATES
OF REFERENCE PATTERNS — S1211

RECOGNIZE TARGET PATTERN — S1212

PATTERN IS
SUCCESSFULLY
RECOGNIZED? — S1213
NO

YES

PERFORM TONE INVERSION
PROCESS ON READ DATA
OF TARGET PORTIONS — S1214

INVERTED
PATTERN IS SUCCESSFULLY
RECOGNIZED? — S1215
NO

YES

CALCULATE AMOUNT OF
MISALIGNMENT
BETWEEN PATTERNS
(= ADJUSTMENT VALUE) — S1216

ANALYSIS ERROR
NOT UPDATE
ADJUSTMENT VALUE — S1217

END

**FIG.14D**

| | PAPER | FILM | |
|---|---|---|---|
| | WHITE | | CLEAR |
| A: K = INVERSION<br>Pri = NORMAL | | | |
| B : K = INVERSION<br>Pri = INVERSION | | | |
| C : Whi = NORMAL<br>Pri = NORMAL | | | |

# FIG.15

Europäisches
Patentamt

European
Patent Office

Office européen
des brevets

## EUROPEAN SEARCH REPORT

Application Number

EP 24 18 4543

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 159493 A (RISO KAGAKU CORP) 14 September 2017 (2017-09-14) * the whole document * ----- | 1-18 | INV. B41J2/21 B41J11/00 |
| X | US 2020/050907 A1 (ISHII DAISUKE [JP] ET AL) 13 February 2020 (2020-02-13) * the whole document * ----- | 1-18 | |

TECHNICAL FIELDS
SEARCHED        (IPC)

B41J
H04N
G06K

The present search report has been drawn up for all claims

| Place of search | Date of completion of the search | Examiner |
|---|---|---|
| The Hague | 18 October 2024 | Dewaele, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 4543

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | Publication date | Patent family member(s) | Publication date |
|---|---|---|---|
| JP 2017159493 A | 14-09-2017 | NONE | |
| US 2020050907 A1 | 13-02-2020 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014091304 A